# EUROPEAN PATENT APPLICATION

(11) **EP 3 998 159 A1**
(43) Date of publication of application: **18.05.2022**
(21) Application number: 21200265.3
(22) Date of filing: 23.11.2016
(51) Int. Cl.: B32B 27/08, B32B 27/30, B32B 27/36, B65D 65/40

(54) **COMPOSTABLE PRODUCT PACKAGING**

(30) Priority: 25.11.2015 US 201562259882 P; 12.10.2016 US 201615291709
(62) Divisional of application: 16819216.9
(71) Applicant: Advanced Extrusion, Inc., Rogers, Minnesota 55374 (US)
(72) Inventor: THIBADO, John, Rogers, 55374 (US); PATTERSON, Greg, Hopkins, 55343 (US); RICHARDS, Chris, White Bear Lake, 55110 (US); LEE, David, Marietta, 30060 (US)
(74) Representative: Fish & Richardson P.C.

(57) **Abstract**

A compostable food packaging container. The container may have from about 84% to about 94% by weight cPLA, from about 5% to about 15% by weight of an oxygen barrier material, and one or more additives. In some embodiments, the container may be a beverage pod. The oxygen barrier material may be polyglutamic acid in some embodiments. In other embodiments, the oxygen barrier material is ethylene vinyl alcohol. The oxygen barrier material may be a food contact grade material. The one or more additives may include an impact modifier and a nucleating agent in some embodiments. Moreover, the one or more additives may include a pigment. The food packaging container may be formed of a sheet material having one or more layers. The sheet material may be extruded, co-extruded or laminated. In some embodiments, the sheet material may be thermoformed or vacuum formed to form the container.

## Description

### CROSS-REFERENCE TO RELATED APPLICATIONS

This application claims priority to U.S. Provisional Application No. 62/259,882, entitled Compostable Composition, and filed November 25, 2015.

### FIELD OF THE INVENTION

The present disclosure relates to materials, devices, and/or containers for product packaging. Particularly, the present disclosure relates to compostable materials, devices, and/or containers for food packaging. More particularly, the present disclosure relates to compostable materials, devices, and/or containers having an oxygen barrier material contributing to a longer shelf life of packaged food.

### BACKGROUND OF THE INVENTION

The background description provided herein is for the purpose of generally presenting the context of the disclosure. Work of the presently named inventors, to the extent it is described in this background section, as well as aspects of the description that may not otherwise qualify as prior art at the time of filing, are neither expressly nor impliedly admitted as prior art against the present disclosure.

Product packaging, and particularly food packaging, may often include one or more non-compostable materials. In many cases, this is because materials that provide an oxygen and/or liquid barrier to keep foods or other products fresh or otherwise sealed from outside contaminants are often non-compostable. For example, single use coffee or drink containers, or "pods," are often composed of petroleum-based polymers, such as styrene, polyethylene, polypropylene, aluminum polymer laminate, and/or other non-compostable materials. Other food packaging containers may be generally compostable, but such containers often lack an oxygen and/or liquid barrier. Without an oxygen and/or liquid barrier, the food product or other product contained within the packaging may lose freshness, taste, color, or may otherwise expire or become inedible more quickly than products contained within packaging having such a barrier.

### BRIEF SUMMARY OF THE INVENTION

The following presents a simplified summary of one or more embodiments of the present disclosure in order to provide a basic understanding of such embodiments. This summary is not an extensive overview of all contemplated embodiments, and is intended to neither identify key or critical elements of all embodiments, nor delineate the scope of any or all embodiments.

The present disclosure, in one or more embodiments, relates to a compostable material for a food packaging container. The material may have two external layers each having about 90% to about 97% by weight of a compostable polymeric material, an internal layer arranged between the external layers, and two bonding layers. The oxygen barrier material may be configured to decrease the oxygen transmission rate of the food packaging containers. Moreover, each bonding layer may be arranged between the internal layer and an external layer. Each bonding layer may have a bonding agent configured to bond the internal layer with the external layers. In some embodiments, the compostable polymeric material may be cPLA. The oxygen barrier material may be polyglutamic acid in some embodiments. In other embodiments, the oxygen barrier material may be ethylene vinyl alcohol. Further, the oxygen barrier material may be a food contact grade material. In some embodiments, each external layer may include an impact modifier and a nucleating agent.

The present disclosure, in one or more additional embodiments, relates to a compostable food packaging container. The container may have from about 84% to about 94% by weight cPLA, from about 5% to about 15% by weight of an oxygen barrier material, and one or more additives. In some embodiments, the container may be a beverage pod. The oxygen barrier material may be polyglutamic acid in some embodiments. In other embodiments, the oxygen barrier material is ethylene vinyl alcohol. The oxygen barrier material may be a food contact grade material. The one or more additives may include an impact modifier and a nucleating agent in some embodiments. Moreover, the one or more additives may include a pigment.

The present disclosure, in one or more additional embodiments, relates to a method for producing a compostable food packaging container. The method may include extruding a first layer, extruding a second layer, and extruding a bonding layer. The first layer may include about 90% to about 97% of a compostable polymer. Further, the second layer may include a compostable oxygen barrier material. In some embodiments, the bonding layer may be configured to bond the first and second layers. The compostable polymer may be cPLA in some embodiments. The oxygen barrier material may be polyglutamic acid in some embodiments. In other embodiments, the oxygen barrier material may be ethylene vinyl alcohol. In some embodiments, the first layer may additionally include an impact modifier and a nucleating agent. The method may additionally include passing the layers through a die and thermoforming the layers to form the food packaging container. In some embodiments, the food packaging container may be a beverage pod.

While multiple embodiments are disclosed, still other embodiments of the present disclosure will become apparent to those skilled in the art from the following detailed description, which shows and describes illustrative embodiments of the invention. As will be realized, the various embodiments of the present disclosure are capable of modifications in various obvious aspects, all without departing from the spirit and scope of the present disclosure. Accordingly, the drawings and detailed description are to be regarded as illustrative in nature and not restrictive.

### BRIEF DESCRIPTION OF THE DRAWINGS

While the specification concludes with claims particularly pointing out and distinctly claiming the subject matter that is regarded as forming the various embodiments of the present disclosure, it is believed that the invention will be better understood from the following description taken in conjunction with the accompanying Figures, in which:
FIG. 1 is a side view of a beverage pod of the present disclosure, according to one or more embodiments.
FIG. 2 is a close up view of a sheet material of the present disclosure, according to one or more embodiments.
FIG. 3 is a diagram of an extrusion system of the present disclosure, according to one or more embodiments.

### DETAILED DESCRIPTION

The present disclosure, in one or more embodiments, relates to food packaging containers that may be generally compostable and may provide for a suitable shelf life of the packaged food. For example, in some embodiments, a food packaging container of the present disclosure may contain between 90% and 100% compostable material(s) while still providing a suitable oxygen barrier. In some embodiments, a food packaging container of the present disclosure may have one or more oxygen barrier materials configured to maintain the freshness or shelf life of a food product within the container by improving the oxygen transmission rate (OTR) of the container. A food packaging container of the present disclosure may be, for example, a beverage pod container configured for single-use within a beverage pod machine, such as a KEURIG or other single-serve coffee machine. In some embodiments, a food packaging container may be constructed of a sheet material having one or more layers. For example, the sheet material may have an internal layer sandwiched between two external layers, and two bonding layers coupling the internal layer with each external layer. In some embodiments, the sheet material may be extruded, co-extruded, or laminated. The resulting container may be compostable while still providing a suitable oxygen barrier for the packaged food.

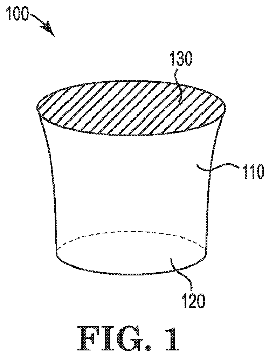

Turning now to FIG. 1, a food packaging container of the present disclosure, according to at least one embodiment, is shown. The food packaging container may be a single-use or multi-use coffee or beverage pod 100 in some embodiments (referred to collectively herein as "beverage pod"). For example, the food packaging container may be configured to hold ground or powdered coffee and/or another ground, powdered, or dehydrated beverage product. In some embodiments, the beverage pod 100 may have a generally cylindrical shape. For example, the beverage pod 100 may have a rounded or generally cylindrically shaped side portion 110 arranged between a first end portion 120 and a second end portion 130. The generally cylindrically shaped side portion 110 may narrow or taper between the second end portion 130 and the first end portion 120 in some embodiments, establishing a draft angle for easily inserting and removing the pod 100. In other embodiments, the beverage pod 100 may have an alternative shape. For example, the beverage pod 100 may have a generally cubic, spherical, or any other suitable shape. In some embodiments, the beverage pod 100 may be shaped and sized to operate with a beverage pod machine. That is, for example, the beverage pod 100 may be configured to be received in a KEURIG, NESPRESSO, or other beverage pod machine and may have a shape compatible with a receiving portion of the respective machine. The beverage pod 100 may generally have an interior surface and an exterior surface. The interior surface may be configured to contact the beverage product or other food product.

The first end portion 120 may be a bottom portion in some embodiments. The second end portion 130, opposing the bottom portion 120, may be a top portion in some embodiments. In some embodiments, the top portion 130 may include a lid. In some embodiments, the lid may be configured to be pierced or punctured so as to operate with a beverage pod machine. In other embodiments, the lid may be configured to be peeled off or otherwise removed from the beverage pod 100. The lid may be composed plastic, foil, paper, and/or any other suitable material(s). In some embodiments, the lid may include one or more compostable materials such as a compostable polymer. In other embodiments, the top portion 130 may be generally open or have an opening and, in some embodiments, may be configured to receive a lid. In some embodiments, the beverage pod 100 may have a flange arranged around the perimeter of the top portion 130, or a portion thereof. The flange may be configured to be arranged on a corresponding ledge within a beverage pod machine, for example, so as to position the pod 100 within the machine, and/or may provide for easily inserting and removing the beverage pod from the machine.

A food packaging container of the present disclosure, such as the beverage pod 100, may be composed of one or more materials. In some embodiments, a food packaging container of the present disclosure may be composed of one or more compostable or biodegradable materials. A compostable or biodegradable material may include an organic or inorganic material configured to chemically or physically break down or decompose under aerobic and/or anaerobic conditions, such as in a municipal or industrial composting or digesting facility. In some embodiments, a food packaging container of the present disclosure may include at least 50% by weight compostable materials. Particularly, a food packaging container of the present disclosure may include at least 75% compostable materials. More particularly, a food packaging container of the present disclosure may contain at least 90% compostable materials. Moreover, in at least one embodiment, a food packaging container of the present disclosure may contain at least 97% or at least 99% compostable materials. Additionally or alternatively, a food packaging container of the present disclosure may be composed of one or more generally non-compostable or non-biodegradable materials.

In some embodiments, a food packaging container of the present disclosure may be composed of one or more polymeric materials, and in some embodiments, one or more compostable polymeric materials. A compostable polymeric material may include a polymeric material that is compostable in accordance with American Society for Testing and Materials (ASTM) standard D6400. Some compostable polymeric materials may include polymers such as, but not limited to, polylactic acid (PLA), Polyhydroxyalkanoate (PHA), polybutylene succinate, polyethylene terephthalate, and/or other polymer materials configured to be compostable or biodegradable. In some embodiments, a food packaging container of the present disclosure may be composed of one or more crystalline PLA materials (cPLA), which may include PLA crystallized during extrusion, thermoforming, or another sheeting, forming, or manufacturing or conversion process. The cPLA may be crystallized to achieve a desired minimum heat deflection temperature and/or operating temperature. For example, in some embodiments, PLA may be crystallized to achieve a minimum heat deflection temperature of between approximately 150 and approximately 250 degrees Fahrenheit. Particularly, the PLA may be crystallized to achieve a minimum heat deflection temperature of between approximately 175 and approximately 225 degrees Fahrenheit. More particularly, the PLA may be crystallized to achieve a minimum heat deflection temperature of between approximately 186 and approximately 211 degrees Fahrenheit. In some embodiments, the cPLA minimum heat deflection may be achieved, determined, or tested in accordance with ASTM standard D648. The desired minimum heat deflection for cPLA may be determined based on a desired operating temperature. For example, the PLA may be crystallized to achieve workability without deformation at an operating temperature of between approximately 140 and approximately 240 degrees Fahrenheit. Particularly, the PLA may be crystallized to achieve workability without deformation at an operating temperature of between approximately 170 and approximately 210 degrees Fahrenheit in some embodiments. More particularly, the PLA may be crystallized to achieve workability without deformation at an operating temperature of between approximately 180 and approximately 200 degrees Fahrenheit.

In some embodiments, a food packaging container of the present disclosure may contain between approximately 50% and approximately 100% by weight of one or more polymeric materials, which may include one or more compostable polymeric materials. Particularly, in some embodiments, a food packaging container may contain between approximately 75% and approximately 99% of one or more polymeric materials, which may include one or more compostable polymeric materials. More particularly, a food packaging container may contain between approximately 90% and approximately 97% of one or more polymeric materials, which may include one or more compostable polymeric materials. In other embodiments, a food packaging container may contain between approximately 84% and 94% of one or more polymeric materials, which may include one or more compostable polymeric materials. In some embodiments, each of the one or more polymeric materials within a food packaging container may be a compostable polymeric material.

In some embodiments, a food packaging container of the present disclosure may contain one or more additives. Additives may be compostable or non-compostable. In some embodiments, compostable additives may include, but are not limited to, one or more impact modifiers and/or one or more nucleating agents. In some embodiments, a food packaging container of the present disclosure may contain between less than 1% and approximately 50% by weight of one or more additives, which may include one or more compostable additives. Particularly, a food packaging container may include between approximately 1% and approximately 30% of one or more additives, which may include one or more compostable additives. More particularly, a food packaging container may contain between approximately 3% and approximately 10% of one or more additives, which may include one or more compostable additives. In some embodiments, each of the one or more additive materials within a food packaging container may be a compostable additive material.

An impact modifier may be a component or material configured to increase the ductility and/or impact strength of the food storage container. An impact modifier may be compostable or non-compostable. Some compostable impact modifiers may include, but are not limited to, acetic acid ethenyl ester, homopolymer, copolymer, and vinyl acetate homopolymer. In some embodiments, a food packaging container of the present disclosure may contain between less than 1% and approximately 50% by weight of one or more impact modifiers, which may include one or more compostable impact modifiers. Particularly, a food packaging container may have between approximately 1% and approximately 30% of one or more impact modifiers, which may include one or more compostable impact modifiers. More particularly, a food packaging container may have between approximately 2% and approximately 10% of one or more impact modifiers, which may include one or more compostable impact modifiers. In some embodiments, each of the one or more impact modifiers within a food packaging container may be a compostable impact modifier.

A nucleating agent may be a component or material configured to accelerate the crystallization of a crystalline or semi-crystalline polymer. For example, a nucleating agent may accelerate the crystallization of PLA. A nucleating agent may be compostable or non-compostable. Some compostable nucleating agents may include, but are not limited to, ethylene bis stearamide, aromatic sulfonate derivative was, and talc. In some embodiments, a food packaging container of the present disclosure may include between less than 1% and approximately 10% by weight of one or more nucleating agents, which may include one or more compostable nucleating agents. Particularly, a food packaging container may include between approximately 0.1% and approximately 5% of one or more nucleating agents, which may include one or more compostable nucleating agents. More particularly, in some embodiments, a food packaging container may include between approximately 0.25% and approximately 1% of one or more nucleating agents, which may include one or more compostable nucleating agents. In some embodiments, each of the one or more nucleating agents within a food packaging container may be a compostable nucleating agent.

Additionally or alternatively, a food packaging container of the present disclosure may have one or more other compostable or non-compostable additives or other materials. For example, in some embodiments, a food packaging container of the present disclosure may have a pigment for affecting the color of the food packaging container. In some embodiments, a food packaging container of the present disclosure may have between less than 1% and approximately 10% by weight of one or more pigments or other additives. Particularly, a food packaging container may have between less than 1% and approximately 5% of one or more pigments or other additives. More particularly, in some embodiments, a food packaging container may have between approximately 0.01% and approximately 1% of one or more pigments or other additives.

In some embodiments, a food packaging container of the present disclosure may have one or more oxygen barrier materials. An oxygen barrier material may be a component or material configured to improve an oxygen transmission rate (OTR) of the container. By decreasing the OTR of a food packaging container, the one or more oxygen barrier materials may increase the container's ability to maintain food freshness, shelf life, or longevity. An oxygen barrier material may be compostable or non-compostable. Examples of compostable oxygen barrier materials include, but are not limited to, ethylene vinyl alcohol (EVOH), polyglutamic acid, and polyglycolic acid. In at least one embodiment, the oxygen barrier material may include G polymer OKS-8049P. In some embodiments, a food packaging container of the present disclosure may have between approximately 1% and approximately 50% by weight of one or more oxygen barrier materials, which may include one or more compostable oxygen barrier materials. Particularly, a food packaging container may have between approximately 2.5% and approximately 32.5% of one or more oxygen barrier materials, which may include one or more compostable oxygen barrier materials. More particularly, a food packaging container may include between approximately 5% and approximately 15% of one or more oxygen barrier materials, which may include one or more compostable oxygen barrier materials. In some embodiments, each of the one or more oxygen barrier materials within a food packaging container may be a compostable oxygen barrier material.

In some embodiments, a food packaging container of the present disclosure, or a portion thereof, may be formed of a single structural component. For example, the food packaging container may be thermoformed, vacuum formed, from a sheet or sheets of material in some embodiments. In other embodiments, the food packaging container may be formed by injection molding or other suitable methods.

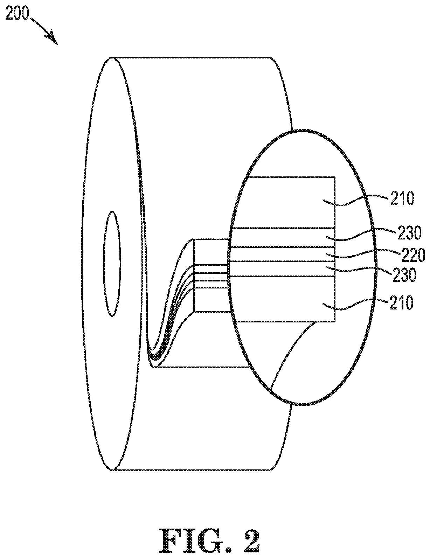

FIG. 2 illustrates a sheet material 200 from which a food packaging container, or a portion thereof, of the present disclosure may be formed by way of thermoforming, for example, according to at least one embodiment. As shown, the sheet material 200 may have one or more material layers. For example, the sheet material 200 may have five material layers in some embodiments. In other embodiments, the sheet material 200 may have 1, 2, 3, 4, 6, or any other suitable number of material layers. In some embodiments, the sheet material may have one or more exterior layers 210, one or more interior layers 220, and one or more bonding layers 230. For example, as shown in FIG. 2, the sheet material 200 may have an interior layer 220 sandwiched between two bonding layers 230, the interior layer and bonding layers further sandwiched between two exterior layers 210. The sheet material 200 may generally have any suitable thickness. For example, in some embodiments, the sheet material 200 may have a thickness of between less than 0.01 inches and approximately 0.2 inches. Particularly, the sheet material 200 may have a thickness of between approximately 0.01 and 0.1 inches. More particularly, the sheet material 200 may have a thickness of between approximately 0.025 and approximately 0.035 inches in some embodiments. Individual layers of the sheet material 200 may have any suitable thickness.

The one or more exterior layers 210 may generally be arranged on an outer or exposed surface of the sheet material 200. In this way, the one or more exterior layers 210 may be arranged on an inner surface and/or outer surface of a formed food packaging container. In some embodiments, the exterior layer(s) 210 may include one or more food contact grade materials, such that an exterior layer may be arranged on an inner surface of the food packaging container where it may contact the food product. In some embodiments, the exterior layer(s) 210 include one or more compostable materials. In some embodiments, the exterior layer(s) 210 may include a compostable polymer, such as cPLA. The exterior layer(s) 210 may additionally include one or more compostable or non-compostable additives, such as one or more impact modifiers, one or more nucleating agents, and/or one or more pigments. In some embodiments, the exterior layer(s) 210 may account for between approximately 50% and approximately 100% by weight of the of the sheet material 200. Particularly, the exterior layer(s) 210 may account for between approximately 67% and approximately 97% by weight of the sheet material 200 in some embodiments. More particularly, the exterior layer(s) 210 may account for between approximately 84% and approximately 94% by weight of the sheet material 200 in some embodiments.

The one or more interior layers 220 may be generally arranged on an inner or generally enclosed surface of the sheet material 200. In some embodiments, the one or more interior layers 220 may be an oxygen barrier layer having one or more oxygen barrier materials, such as ethylene vinyl alcohol, polyglutamic acid, or polyglycolic acid. The interior layer(s) 220 may include one or more compostable materials in some embodiments. The interior layer(s) 220 may account for between less than 1% and approximately 50% by weight of the sheet material 200 in some embodiments. Particularly, the interior layer(s) 220 may account for between approximately 2.5% and approximately 32.5% by weight of the sheet material 200. More particularly, the interior layer(s) 220 may account for between approximately 5% and approximately 15% of the sheet material 200 in some embodiments.

One or more bonding layers 230 may be arranged between an interior layer 220 and an exterior layer 210, and may be configured to bond the two layers together. The bonding layer 230 may include any suitable bonding or adhesive material(s). In some embodiments, the one or more bonding or adhesive materials may be compostable. For example, in at least one embodiment, the bonding material may include NIPPON GOHSEI BTR-8002P or similar biodegradable resins. The bonding layer(s) 230 may account for between less than 1% and approximately 15% by weight of the sheet material 200 in some embodiments. Particularly, the bonding layer(s) 230 may account for between approximately 0.25% and approximately 9.5% by weight of the sheet material 200. More particularly, the bonding layer(s) 230 may account for between approximately 0.5% and approximately 3% by weight of the sheet material 200 in some embodiments.

In some embodiments a lid or cap for a food packaging container may include one or more layers of material. For example, the lid or cap may include one or more exterior layers and one or more reinforcing layers. In some embodiments, the lid or cap may include a reinforcing layer sandwiched between two exterior layers. The exterior layer(s) may include one or more compostable or non-compostable polymer materials, such as PLA or cPLA, for example. In some embodiments, the exterior layer(s) may be similar to the exterior layers 210 described above with respect to the sheet material 200. The reinforcing layer may include one or more organic materials, such as one or more paper materials in some embodiments.

### EXAMPLES

The following examples are illustrative sheet materials having one or more layers and having desirable mechanical, thermal, and oxygen barrier properties for a compostable food packaging container, such as a beverage pod that may be used for cold and/or hot water applications.

### Example 1: Single layer compostable food packaging container

**Table 1: Example Composition**

| **Layer** | **% by Weight of Sheet Material** | **Material** | **Name** | **% by Weight of Layer** |
|---|---|---|---|---|
| 1 | 100% | cPLA | NatureWork Ingeo4032D | 96% |
| | | Impact Modifier | Vinyl acetate homopolymer Wacker master batch Vinnex 2514C | 3% |
| | | Nucleating Agent | Ethylene bis stearamide sulkano master batch na S516 | 0.50% |

### Example 2: Multi-layer compostable food packaging container

**Table 2: Example 2 Compositions**

| **Layer** | **% by Weight of Sheet Material** | **Material** | **Name** | **% by Weight of Layer** |
|---|---|---|---|---|
| | | cPLA | NatureWork Ingeo4032D | 96% |
| 1 | 90% | Impact Modifier | Vinyl acetate homopolymer Wacker master batch Vinnex 2514C | 3% |
| | | Nucleating Agent | Ethylene bis stearamide sulkano master batch na S516 | 0.50% |
| | | Pigment | Grey (or other suitable color) | 0.20% |
| 2 | 10% | Oxygen Barrier | Polyglycolic acid | 100% |

### Example 3: Multi-layer compostable food packaging container

**Table 2: Example 2 Compositions**

| **Layer** | **% by Weight of Sheet Material** | **Material** | **Name** | **% by Weight of Layer** |
|---|---|---|---|---|
| | | cPLA | NatureWork Ingeo4032D | 96% |
| 1 | 87% | Impact Modifier | Vinyl acetate homopolymer Wacker master batch Vinnex 2514C | 3% |
| | | Nucleating Agent | Ethylene bis stearamide sulkano master batch na S516 | 0.50% |
| | | Pigment | Grey (or other suitable color) | 0.20% |
| 3 | 3% | Bonding Material | -- | 100% |
| 2 10% Oxygen Barrier EVOH 100% | | | | |

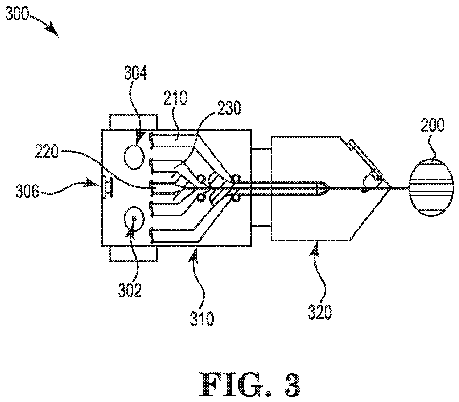

A sheet material of the present disclosure may be formed by any suitable process or processes. In some embodiments, the sheet material may be formed by extrusion or co-extrusion, for example. In other embodiments, the sheet material may be formed by lamination process or any other suitable process. FIG. 3 illustrates an example of an extrusion system 300 for extruding a sheet material of the present disclosure, such as sheet material 200, according to at least one embodiment. The extrusion system 300 may have one or more extruders 302, 304, 306; a feed block 310; and a die 320 in some embodiments.

The one or more extruders 302, 304, 306 may be configured to extrude the one or more molten layers of the sheet material 200. For example, a first extruder 302 may extrude one or more layers of material, such as one or more external layers 210; a second extruder 304 may extrude one or more layers of material, such as one or more bonding layers 230; and a third extruder 306 may extrude one or more layers of material, such as one or more internal layers 220; and a. The one or more extruders 302, 304, 306 may be configured to minimize sharp bends or hang up areas in the melt flow of the materials. Each extruder 302, 304, 306 may be brought to a desired operating temperature. For example, each extruder 302, 304, 306 may be brought to an operating temperature of between approximately 300 degrees Fahrenheit and approximately 500 degrees Fahrenheit.

In some embodiments, one or more extruders may heat material to be extruded using a plurality of heaters. For example, one or more extruders may have a plurality of heating zones arranged along a barrel length of the extruder. Each heating zone may span a particular length along the barrel length of the extruder and may include a heater configured to heat material(s) within the extruder to a desired temperature or temperature range. In some embodiments, each extruder 302, 304, 306 may have five heating zones. In other embodiments, the extruders 302, 304, 306, may each have any other suitable number of heating zones. In some embodiments, a first heating zone ("Zone 1") may be arranged at or near an end of the extruder where material(s) enter the extruder barrel for extrusion. Another heating zone, which may be a fifth heating zone in some embodiments ("Zone 5") may be arranged at or near an opposing end of the extruder where material(s) are extruded from the extruder. Other heating zones may be arranged between Zones 1 and 5. Below is a table showing operating temperature ranges for each of extruders 302, 304, and 306, according to one or more embodiments, where each extruder has five heating zones.

| | Extruder 302 | Extruder 304 | Extruder 306 |
|---|---|---|---|
| Zone 1 Operating Temperature | 345-365 °F | 380-400 °F | 380-400 °F |
| Zone 2 Operating Temperature | 365-385 °F | 400-420 °F | 400-420 °F |
| Zone 3 Operating Temperature | 380-400 °F | 415-435 °F | 418-438 °F |
| Zone 4 Operating Temperature | 410-430 °F | 418-438 °F | 420-440 °F |
| Zone 5 Operating Temperature | 420-440 °F | 420-440 °F | 420-440 °F |

More particularly, in some embodiments, the extruders 302, 304, 306 may have the following operating temperature ranges for each of five heating zones:

| | Extruder 302 | Extruder 304 | Extruder 306 |
|---|---|---|---|
| Zone 1 Operating Temperature | 350-360 °F | 385-495 °F | 385-495 °F |
| Zone 2 Operating Temperature | 370-380 °F | 405-415 °F | 405-415 °F |
| Zone 3 Operating Temperature | 385-495 °F | 420-430 °F | 423-433 °F |
| Zone 4 Operating Temperature | 415-425 °F | 423-433 °F | 425-435 °F |
| Zone 5 Operating Temperature | 425-435 °F | 425-435 °F | 425-435 °F |

Even more particularly, in some embodiments, the extruder 302 may have operating temperatures of approximately 355 °F, 375 °F, 390 °F, 420 °F, and 430 °F at Zones 1, 2, 3, 4, and 5, respectively; extruder 304 may have operating temperatures of approximately 390 °F, 410 °F, 425 °F, 428 °F, and 430 °F at Zones 1, 2, 3, 4, and 5, respectively; and extruder 306 may have operating temperatures of approximately 390 °F, 410 °F, 428 °F, 430 °F, and 430 °F at Zones 1, 2, 3, 4 and 5, respectively. pIn other embodiments, each heating zone for each extruder 302, 304, 306 may have alternative operating temperatures. Generally, the progression of heating zones 1 through 5, between the entrance and exit points of each extruder, may allow for gradual heating of the material(s) within the extruders. Together, the heating zones may be configured to heat the material(s) within the extruders to a molten state without degrading the material(s). Degradation may occur, for example as a result of frictional heat caused by overheating of the material(s). By minimizing degradation, the material(s) within each extruder may achieve a relatively stable melt state.

In some embodiments, multiple extruders may be initiated at different times. For example, the melt flow of the first extruder 302 may be initiated. Once flow from the first extruder 302 is generally thermally stable, the second extruder 304 may be initiated. Once flow from the second extruder 304 is generally thermally stable, the third extruder 306 may be initiated. Timing one or more extruders in this way such that general thermal stability may be achieved in one extruder before initiating another extruder, may provide for reduced scrap or wasted materials.

The extruder(s) 302, 304, 306 may collect at a melt distribution feed block 310. The feed block 310 may arrange the materials extruded from the extruder(s) into layers. For example, the feed block 310 may arrange the material extruded from the first extruder 302 into two external layers 210; the feed block may arrange the material extruded from the second extruder 304 into two bonding layers 230; and the feed block may arrange the material extruded from the third extruder 306 into an internal layer 220. Moreover, the feed block 310 may converge the layers and direct them toward a die 320. The die 320 may generally compress and/or shape the extruded layers into a sheet material 200.

Food packaging containers, materials and compositions for food packaging containers, and methods for making the same have been described. It may be appreciated that a food packaging container, material, or composition of the present disclosure may be generally compostable. For example, a container, material, or composition of the present disclosure may be composed of at least 50% compostable materials in some embodiments. Particularly, in some embodiments, a container, material, or composition of the present disclosure may be composed of at least 75% compostable materials. More particularly, a container, material, or composition of the present disclosure may be composed of at least 99% compostable materials. In this way, the containers, materials, and compositions described herein may be particularly applicable with respect to single-use food packaging containers or other single-use containers. By providing single-use food packaging containers for particular products, consumers of such products may produce less landfill waste or less harmful waste.

As used herein, the terms "substantially" or "generally" refer to the complete or nearly complete extent or degree of an action, characteristic, property, state, structure, item, or result. For example, an object that is "substantially" or "generally" enclosed would mean that the object is either completely enclosed or nearly completely enclosed. The exact allowable degree of deviation from absolute completeness may in some cases depend on the specific context. However, generally speaking, the nearness of completion will be so as to have generally the same overall result as if absolute and total completion were obtained. The use of "substantially" or "generally" is equally applicable when used in a negative connotation to refer to the complete or near complete lack of an action, characteristic, property, state, structure, item, or result. For example, an element, combination, embodiment, or composition that is "substantially free of" or "generally free of" an element may still actually contain such element as long as there is generally no significant effect thereof.

In the foregoing description various embodiments of the present disclosure have been presented for the purpose of illustration and description. They are not intended to be exhaustive or to limit the invention to the precise form disclosed. Obvious modifications or variations are possible in light of the above teachings. The various embodiments were chosen and described to provide the best illustration of the principals of the disclosure and their practical application, and to enable one of ordinary skill in the art to utilize the various embodiments with various modifications as are suited to the particular use contemplated. All such modifications and variations are within the scope of the present disclosure as determined by the appended claims when interpreted in accordance with the breadth they are fairly, legally, and equitably entitled.

### Embodiments:

Although the present invention is defined in the claims, it should be understood that the present invention can also (alternatively) be defined in accordance with the following embodiments:
1. A compostable material for a food packaging container, the material comprising:
   two external layers comprising about 90% to about 97% by weight of a compostable polymeric material;
   an internal layer arranged between the external layers, the internal layer comprising an oxygen barrier material configured to decrease the oxygen transmission rate of the food packaging container; and
   two bonding layers, each bonding layer arranged between the internal layer and an external layer, the bonding layers comprising a bonding agent configured to bond the internal layer with the external layers.
2. The material of embodiment 1, wherein the compostable polymeric material is cPLA.
3. The material of embodiment 1, wherein the oxygen barrier material is polyglutamic acid.
4. The material of embodiment 1, wherein the oxygen barrier material is ethylene vinyl alcohol.
5. The material of embodiment 1, wherein the oxygen barrier material is a food contact grade material.
6. The material of embodiment 1, wherein the external layers further comprise an impact modifier and a nucleating agent.
7. A compostable food packaging container comprising:
   about 84% to about 94% by weight cPLA;
   about 5% to about 15% by weight of an oxygen barrier material; and
   one or more additives.
8. The compostable food packaging container of embodiment 7, wherein the container is a beverage pod.
9. The compostable food packaging container of embodiment 7, wherein the oxygen barrier material is polyglutamic acid.
10. The compostable food packaging container of embodiment 7, wherein the oxygen barrier material is ethylene vinyl alcohol.
11. The compostable food packaging container of embodiment 7, wherein the oxygen barrier material is a food contact grade material.
12. The compostable food packaging container of embodiment 7, wherein the one or more additives comprise an impact modifier and a nucleating agent.
13. The compostable food packaging container of embodiment 7, wherein the one or more additives comprise a pigment.
14. A method for producing a compostable food packaging container, the method comprising the steps of:
   extruding a first layer, the first layer comprising about 90% to about 97% of a compostable polymer;
   extruding a second layer, the second layer comprising a compostable oxygen barrier material; and
   extruding a bonding layer, the bonding layer configured to bond the first and second layers together.
15. The method of embodiment 14, wherein the compostable polymer is cPLA.
16. The method of embodiment 14, wherein the oxygen barrier is polyglutamic acid.
17. The method of embodiment 14, wherein the oxygen barrier material is ethylene vinyl alcohol.
18. The method of embodiment 14, wherein the first layer further comprises an impact modifier and a nucleating agent.
19. The method of embodiment 14, further comprising:
   passing the layers through a die; and
   thermoforming the layers to form the food packaging container.
20. The method of embodiment 19, wherein the food packaging container is a beverage pod.

## Claims

1. A sheet material (200) comprising:
two or more exterior layers (210), wherein the two or more exterior layers comprise one or more compostable materials, wherein the two or more exterior layers account for between 67% and 97% by weight of the sheet material;
one or more interior layers (220), wherein the one or more interior layers comprise one or more oxygen barrier materials, and wherein the one or more interior layers account for between 2.5% and 32.5% by weight of the sheet material; and
two or more bonding layers (230), wherein the one or more interior layers are sandwiched between two of the two or more bonding layers, and wherein the interior layers and the bonding layers are further sandwiched between two of the two or more exterior layers, and wherein the bonding layers account for between 0.25% and 9.5% by weight of the sheet material.

2. The sheet material of claim 1, wherein the sheet material has a thickness of between 0.0254 cm (0.01 inches) and 0.508 cm (0.2 inches), and optionally wherein the sheet material has a thickness of between 0.0635 cm (0.025 inches) and 0.0889 cm (0.035) inches.

3. The sheet material of claim 1, wherein the two or more exterior layers comprise a compostable polymer.

4. The sheet material of claim 3, wherein the compostable polymer comprises crystalline polylactic acid.

5. The sheet material of claim 1, wherein the two or more exterior layers comprise one or more compostable or non-compostable additives.

6. The sheet material of claim 5, wherein the one or more compostable or non-compostable additives comprise impact modifiers, one or more nucleating agents, or one or more pigments, or any combination thereof.

7. The sheet material of claim 1, wherein the two or more exterior layers account for between 84% and 94% by weight of the sheet material.

8. The sheet material of claim 1, wherein the one or more oxygen barrier materials comprise ethylene vinyl alcohol, polyglutamic acid, or polyglycolic acid.

9. The sheet material of claim 1, wherein the one or more interior layers comprise one or more compostable materials.

10. The sheet material of claim 1, wherein the one or more interior layers account for between 5% and 15% of the sheet material.

11. The sheet material of claim 1, wherein the one or more bonding layers are configured to bond an interior layer and an exterior layer together.

12. The sheet material of claim 11, wherein the bonding or adhesive materials comprise compostable bonding or compostable adhesive materials.

13. The sheet material of claim 1, wherein the bonding layers account for between 0.5% and 3% by weight of the sheet material.

14. A food packaging container comprising the sheet material of any one of claims 1-13.

15. The food packaging container of claim 14, wherein the food packaging container is a beverage pod (100).
